**Europäisches Patentamt**

**European Patent Office**

**Office européen des brevets**

(19)

(11) Veröffentlichungsnummer : **0 364 700 B1**

(12)

# EUROPÄISCHE PATENTSCHRIFT

(45) Veröffentlichungstag der Patentschrift :
**03.05.95 Patentblatt 95/18**

(51) Int. Cl.$^6$ : **H04L 12/40**

(21) Anmeldenummer : **89115672.1**

(22) Anmeldetag : **25.08.89**

(54) **Buskoppelschaltung.**

(30) Priorität : **18.10.88 DE 3835458**
**20.02.89 DE 3905109**

(43) Veröffentlichungstag der Anmeldung :
**25.04.90 Patentblatt 90/17**

(45) Bekanntmachung des Hinweises auf die
Patenterteilung :
**03.05.95 Patentblatt 95/18**

(84) Benannte Vertragsstaaten :
**DE FR GB IT NL**

(56) Entgegenhaltungen :
**EP-A- 0 143 699**

(56) Entgegenhaltungen :
**EP-A- 0 184 816**
**DE-A- 3 433 150**
**REGELUNGSTECHNISCHE PRAXIS Bd. 25, Nr.
10, 1983, MUNCHEN,DE B. WIEMANN ET AL.:'-
Bussysteme' pages S61 - S64;**
**REGELUNGSTECHNISCHE PRAXIS Bd. 25, Nr.
11, 1983, MUNCHEN, DE B. WIEMANN ET
AL.:'Bussysteme' pages S69 - S71;**

(73) Patentinhaber : **ANT Nachrichtentechnik
GmbH
Gerberstrasse 33
D-71522 Backnang (DE)**

(72) Erfinder : **Heichler, Johannes, Dipl.-Ing.
Haselweg 8
D-7157 Murrhardt 3 (DE)**

EP 0 364 700 B1

**Beschreibung**

Die Erfindung betrifft eine Buskoppelschaltung ausgehend vom Oberbegriff des Patentanspruchs 1.

Eine solche Buskoppelschaltung ist aus "Regelungstechnische Praxis, 25. Jahrgang, 1983, Heft 10, Seiten S61 bis S64, sowie Heft 10, Seiten S69 und S70" bekannt. Bei der dortigen Buskoppelschaltung weist ein Busempfänger eine Hysterese zur Unterdrückung überlagerter Störsignale auf.

Teilnehmer, z.B. Datensender oder Datenempfänger, die über einen gemeinsamen Bus miteinander in Verbindung stehen, weisen als Schnittstelle Treiberschaltungen auf. Bei einem Kurzschluß bei einem Teilnehmer oder in einer Schnittstelle ist oft der gesamte Bus unbrauchbar. Aus der DE-A-34 33 150 ist eine mit Optokopplern aufgebaute Schnittstellenanordnung bekannt, die bei Fehlern an den Optokopplern, z.B. bei Kurzschlüssen, mittels einer den Optokopplern zugeordneten Kontrollschaltung eine Sperrung der Verbindung zwischen Treiber und Dateneingang verhindert.

Aufgabe der Erfindung ist es, die Buskoppelschaltung gemäß dem Oberbegriff des Patentanspruchs 1 so auszubilden, daß auch beim Auftreten von Bauelementeausfällen, insbesondere Kurzschlüssen, ein bidirektionaler Betrieb mit hohen Datenraten möglich ist.

Diese Aufgabe wird durch die kennzeichnenden Merkmale des Patentanspruchs 1 gelöst. Die Unteransprüche zeigen vorteilhafte Weiterbildungen auf.

Bei der Realisierung gemäß DE-A-34 33 150 erfolgt bei falscher Ansteuerung z.B. durch einen defekten Teilnehmer - Mikroprozessor - eine Sperrung des Optokopplers mitsamt Treiber. Wenn jedoch der Treiber oder der Optokoppler selbst einen Kurzschluß aufweist, kann der gesamte Bus blockiert werden. Bei der Realisierung gemäß der Erfindung tritt dieser Nachteil nicht auf. Auch ist die Realisierung gemäß DE-A-34 33 150 nicht für hohe Datenraten brauchbar. Die Realisierung gemäß der Erfindung erfordert wenig Schaltmittel. Es sind lediglich ein als integrierter Baustein erhältlicher bidirektionaler Treiber, drei Widerstände und ein Kondensator pro Teilnehmer notwendig.

Bei der Erfindung wird der durch die galvanische Trennung verlorengegangene Gleichspannungswert durch eine zusätzliche Hysteresebeschaltung verzerrungsfrei wiederhergestellt. Dies erlaubt den Betrieb mit hohen Datenraten, da nur Flanken des Datensignals ausgewertet werden müssen.

Um den Bus außerdem noch fehlertolerant zu machen, wird ein Bauelement in der Hysteresebeschaltung so dimensioniert, daß auch bei Kurzschlüssen ein bidirektionaler Busbetrieb weiterhin möglich ist.

Die Anordnung gemäß der Erfindung erlaubt eine bidirektionale Datenübertragung mit elektrischer Fehlertoleranz von mehreren, beispielsweise acht Kurzschlüssen. Andere Fehler, wie durch bloßen Ausfall gekennzeichnete Teilnehmer, fallen für den Bus nicht ins Gewicht. Das Bussystem benötigt keinerlei Taktleitungen für das "Bushandling" was die Zuverlässigkeit noch erhöht. Es ist auch unempfindlich gegen falsche Steuerung, da die Serienwiderstände als Bestandteile der Gleichspannungsabtrennmittel auch als Schutzimpedanzen wirken. Ein versehentlich statisch auf den Bus "geklemmter" Treiberausgang (Sendebetrieb) hat dieselbe nicht nachteilige Auswirkung auf den Bus wie der Kurzschluß eines Treiberausganges da statische Signale auf dem Bus nicht vorkommen und der DC-Wert aus den Flanken der Daten durch künstliche Hysterese zurückgewonnen wird.

Die Ausgestaltungen gemäß den Patentansprüchen 4, 5 und 7, sowie dem Patentanspruch 10 weisen folgende zusätzliche Vorteile auf:

Die Signalform der durch den Bus übertragenen Digitalsignale verbessert sich insbesondere bei Bitraten >20 MBit/s, ohne die Fehlertoleranz wesentlich einzuengen. Durch die Maßnahmen der Erfindung erhält der Bus einen amplitudenabhängigen passiven dynamischen Abschluß, bzw. einen aktiven Busabschluß (Patentanspruch 10).

Anhand der Zeichnungen werden Ausführungsbeispiele der Erfindung nun näher erläutert.

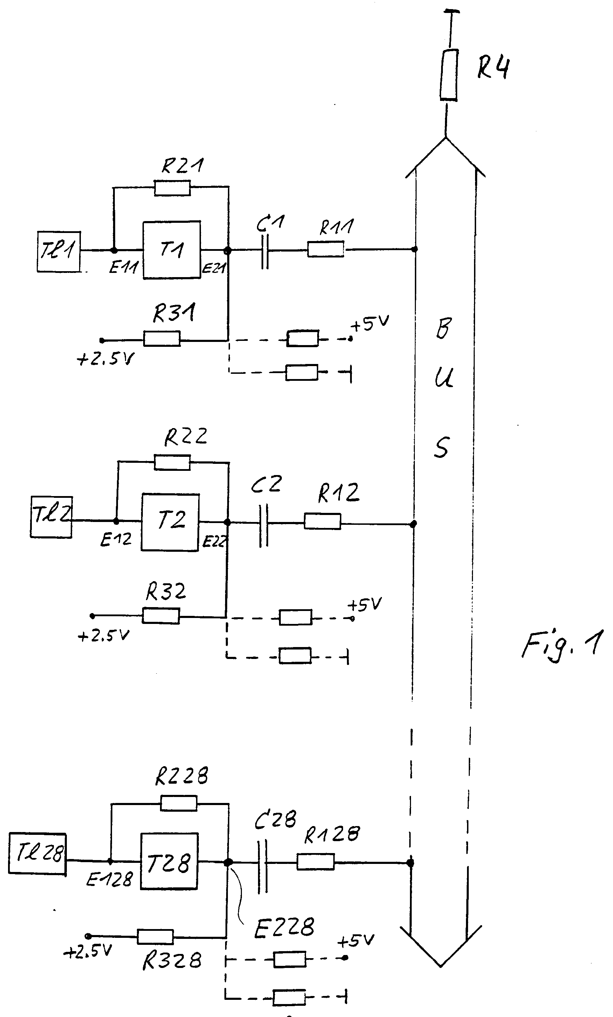

Der in der Figur 1 dargestellte Bus ist über insgesamt 28 bidirektionale Treiber T1, T2, ... mit den Teilnehmern Tl1, Tl2 ..., z.B. Mikroprozessoren, verbindbar. Als bidirektionale Treiber eignen sich beispielsweise die integrierten Schaltkreise AC 245 der FACT (Fairchild Advanced CMOS Technology)-Technologie. Über diese Treiber sind zwei Teilnehmer, wobei der eine einen Datensender und der andere einen Datenempfänger oder umgekehrt darstellt, fehlertolerant in Realzeit gruppenweise schaltbar (8 Bit). Sowohl ein Kurzschluß oder eine Unterbrechung bei einem Teilnehmer darf keine gravierenden Auswirkungen auf das Gesamtsystem haben. Die busnahen Treibereingänge E21, E22 ... sind über Gleichspannungsabtrennmittel, jeweils bestehend aus einer Serienschaltung eines Kondensators C1, C2, ... mit einem Widerstand R11, R12, ... an den Bus angeschlossen. Damit ergibt sich folgender Betrieb: Bei vollständig intaktem System treibt ein Treiber im Sendebetrieb, beispielsweise T1, den Bus über die Serienschaltung des Kondensators C1 mit dem Widerstand R11. Dabei geht der Gleichspannungswert des Treibers selbst verloren, was aus Gründen der Fehlertoleranz, wie noch erläutert wird, notwendig ist. Alle übrigen Treiber des Busses seien nun auf Empfangsbetrieb geschaltet. Dann passiert die Dateninformation zunächst alle Widerstände R11, R12, ... und alle Kondensatoren C1, C2, ... . Der Gleichspannungswert des Busses geht somit auch verloren. Er wird aber - in Form einer künstlichen Hysterese - mit Hilfe eines Spannungsteilers R21, R31 bzw. R22, R32 ... an jedem Treiber wieder, bzw. mit anderem Wert wieder eingeführt. Die Teilerkette, d.h. die Serienschaltung der Spannungsteilerwiderstände, liegt zwischen dem busfernen Eingang E11, bzw. E12, ... des Treibers und der halben Speisespannung - bei den verwendeten integrierten Treibern + 2,5 V. Aus Zuverlässigkeitsgründen ist es vorteilhaft, keine zentrale Versorgung mit der halben Speisespannung vorzusehen, sondern anstelle des Widerstandes R3X zwei Widerstände vorzusehen, von denen der eine an die Stromversorgung des Treibers (z.B. 5 V) und der andere an Masse (GND) gelegt ist. Damit steht die Schwellwertbezugsspannung der Treiber jeweils neu zur Verfügung (Fig. 1 gestrichelt). Der Teilerabgriff ist mit dem busnahen Treibereingang E21, bzw. E22, ... verbunden. Damit die Busleitung selbst nicht beliebige Potentiale annehmen kann (Durchschlaggefahr der Kondensatoren), ist ein Bus-Erdungswiderstand R4 von etwa 100 KOhm vorgesehen. Die Hysterese bestimmt im eingeschwungenen Zustand die Empfindlichkeit des Empfängers um die Schwelle (bei FACT 2,5 Volt) herum. Sie gibt an, ab welcher Minimalamplitude (Verkleinerung durch Kurzschlüsse) das System seine Funktion einstellt, oder aber: Wieviel Kurzschlüsse das System im Endeffekt verkraften kann. Anhand des "eingeschwungenen Zustandes" sei dieser Sachverhalt erläutert: Ist auf dem Bus eine z.B. positive Flanke aufgetreten, wird der AC245 infolgedessen über den Widerstand R11 bzw. R12 ... und den Kondensator C1, bzw. C2, ... nach HIGH ausgesteuert. Er sei jetzt mit der Inputseite auf den Bus geschaltet. Durch die Rückkopplung über den Widerstand R21 wird dieser Zustand an den Eingang E11 - spannungsgeteilt durch R31 - zurückgegeben. Dabei wird nach hinreichend langer Zeit sich an C1 bzw. am Eingang ein solcher Spannungszustand einstellen, daß die Spannung beträgt:

$$U_+ = 2,5V + 2,5V \times (R31/(R21 + R31))$$

Nach hinreichend langer Zeit bedeutet hier, daß auf der betreffenden Busleitung "Dauer-0" oder aber "Dauer-1" aufliegt. Dann findet jede folgende Flanke eine Hysterese vor, die sich errechnet:

$$dU = U_+ + U_- = 2 \times 2,5V \times (R31/(R21 + R31))$$

Das heißt, nach dem Auftreten positiver Flanken ist $U_+$, nach dem Auftreten negativer Flanken $U_-$ relevant. Es kann, da beide Anteile betragsmäßig gleich sind, nur mit einem Anteil gerechnet werden, wenn man seine Auswirkung richtig berücksichtigt. Wichtig ist in diesem Zusammenhang die EMI-Störanfälligkeit des Busses. Liegt die Hysterese bei Null (d.h. R21 unendlich), so wird sich der eingeschwungene Gleichspannungswert bei 2,5 Volt, also genau auf der Schwelle einstellen. Dieser Betrieb ist schon allein wegen des völligen Verlustes des Gleichspannungswertes verboten. Beträgt die Hysterese wenige Millivolt, ist der Störabstand weitaus zu gering, d.h.

Rauschsignale oder parasitäre Schwingungen lösen Aktivität des Bustreibers aus.

Ein Kurzschluß z.B. eines Treiberausganges hat einen Amplitudenverlust zur Folge. Je nachdem, ob es sich um einen Kurzschluß nach Erde GND oder positivem Versorgungspotential VCC handelt, tritt eine starke Verzerrung des Gleichspannungswertes auf. Es sei z.B. ein Kurzschluß nur eines Treibers nach GND angenommen: Dann würde ohne zusätzliche Maßnahmen das Potential hart auf Null gelegt. Mit einem Serienwiderstand hingegen würde die dynamische Amplitude halbiert (durch den Widerstand sowohl beim Sender als auch beim Empfänger), jedoch in ihrem Maximalwert auf + 2,5 Volt begrenzt. Das ist aber genau die Schwelle, so daß kein definierter Zustand "HIGH" mehr übertragen werden könnte. Die Grundidee ist nun, diese Verzerrung des Gleichspannungswertes durch Zusatzmaßnahmen aufzuheben. Dazu wird in Reihe zum Serienwiderstand R11, bzw. R12, ... ein hinreichend großer Kondensator C1 bzw. C2, ... geschaltet, der für die steilen Flanken einen Kurzschluß darstellt, den verzerrten Gleichwert jedoch abtrennt. Dann sehen die Verhältnisse folgendermaßen aus: Beim Kurzschluß eines Treibers sei es nach GND oder VCC, wird lediglich die Amplitude verkleinert. Ohne die Spannungsteilerwiderstände wäre der Gleichwert an den Eingängen der Empfänger nun jedoch unbestimmt. Je nach Offsetstrom würde das Potential nach oben oder unten driften, womit wiederum kein Zustand übertragen werden könnte. Es sind daher die Spannungsteilerwiderstände notwendig, um im eingeschwungenen Zustand (Kondensator im umgeladenen Zustand) Stabilität zu erreichen, d.h. das Eingangspotential in der Nähe der Schwelle, aber nicht zu nah, "festzubinden". Wie nah, das hängt nun von der Anzahl der Kurzschlüsse ab, die toleriert werden können. Dazu sei daher eine kurze Abschätzung gemacht:

Bei einem Kurzschluß tritt, wie gesagt, Wechselspannungsteilung durch die Serienwiderstände auf. Die Flankenhöhe ist bei diesem Verfahren von Bedeutung, so daß sich ergibt:

$$U = 5V \times R11/2R11 = Umax/2 = 2,5 \, Vss.$$

Die weiteren Indizes der Serienwiderstände und Spannungsteilerwiderstände sind nachfolgend weggelassen, da nun nur noch mit ihren Widerstandswerten gerechnet wird und diese für alle Widerstände mit übereinstimmenden ersten Indizes gleich sind.

Bei n Kurzschlüssen ergibt sich folgerichtig:

$$U = 5V \times R1/(R1 + nR1) = Umax \times 1/(1 + n).$$

Es würde also bei drei Kurzschlüssen die Spannung auf 1/4, bei vier Kurzschlüssen auf 1/5 usw. reduziert werden, also auf 1Vss.

Es sei hier nun einmal angenommen (die Verhältnisse sind in der Tat aber etwas komplizierter, darauf wird noch eingegangen), daß die Hysterese innerhalb dieser Amplitude liegen muß. Dann ist für R2 und R3 zu erhalten:

$$dU = 1V = |2U_+| = 5V \times R3/(R2 + R3).$$

Man erhält für das Widerstandsverhältnis: $R3/(R2+R3) = 1/5$. Das ist in erster Näherung der Rechengang für die Bemessung der Hysterese. Als Nächstes soll jetzt auf die etwas komplizierteren Verhältnisse im Verbund aller Treiberstufen eingegangen werden.

Bisher wurde derart genähert, daß die Widerstände R2 und R3 auch in ihrer gesamten Parallelschaltung entlang der Busleitung wesentlich größer als die Serienwiderstände angenommen wurden.

Zunächst ein Kriterium für die Bemessung des Serienwiderstandes R1:
Die Eingangskapazität eines bidirektionalen Bustreibers beträgt etwa im Falle von FACT 15 pF. Das ergibt bei 28 Steckplätzen eine Gesamtkapazität von 420 pF. Will man diese in ca. 4 nS umladen (wesentlich kürzer als eine Taktperiode des Datensignals), dann erhält man grob für den Serienwiderstand = 10 Ohm. Außerdem muß, wie gesagt, jeder Treiber die Parallelschaltung aus allen Hysteresespannungsteilern treiben. Diese kann man zwar in der Tat so hochimpedant bemessen, daß sie vernachlässigbar sind, also die volle Amplitude an den Eingängen der Empfänger ansteht. Andererseits ist es vorteilhaft, wenn die Parallelschaltung aller Teiler in die Größenordnung des Leitungs-Wellenwiderstandes fällt, weil dann signaltechnische Verbesserungen zu erwarten sind. Jeder sendende Treiber "sieht" dann nämlich in beiden Busrichtungen Werte mit Wellenwiderstandsgrößenordnung, was Reflexionen reduziert. Hinzu addiert sich noch der große Dämpfungsbelag entlang der Leitung, was noch einmal Reflexionen entgegenwirkt. Andererseits tritt dann auch wiederum Spannungsteilung zwischen dem Serienwiderstand des Treibers und den Hystereseteilern auf. Hier ist bei der Bemessung nach Möglichkeit ein Optimum zu finden. Ein weiterer Vorteil ist, daß, haben die Spannungen an den Empfängern erst einmal während eines Flankenvorganges die Schwelle erreicht, die Empfänger beim Umladen mithelfen, da sie auf Grund der Rückkopplung über den Widerstand R2 auf den Bus zurückwirken. Alle Empfänger wirken somit als Bus-Repeater, ein Vorteil, der in Bezug auf die Sauberkeit des Signals nicht zu unterschätzen ist. Quantifiziert läßt sich die Spannungsteilung durch die Hysteresewiderstände wie folgt ausdrücken:

$$Ue = Uq \times (Rh/28)/(Rh/28 + R1);$$

Darin sind:
Ue    die Spannung am Empfänger,
Uq    die FACT-Quellenspannung (5Vss),
Rh    die Parallelschaltung aus den Spannungsteilerwiderständen R2 und R3.

Vernachlässigt wurde hierbei die Spannungsteilung zwischen R1 und Rh, welche um Größenordnungen im Wert auseinanderliegen. Bei allem werden jetzt nur die Flanken betrachtet, die Kondensatoren C1, C2, ... also als wechselspannungsmäßiger Kurzschluß angesehen.

Eine erneute Hysterese tritt jetzt durch die Spannungsteilung zwischen R1 und Rh/28 auf. Sie wächst in dem Sinne, wie Rh bzw. Rh/28 abnimmt. Bei den erwähnten vier zulässigen Kurzschlüssen ($Uq' = Uq/5$) muß ein Empfänger noch störungsfrei über die Schwelle gesteuert werden. Nimmt man wiederum - worst case - den eingeschwungenen Zustand an, also eine lange Zeit auf dem Bus anstehende "0" oder "1", so ist ein Hub von minimal 0,5 Volt hierzu notwendig, wenn man bei dem oben berechneten Verhältnis $R3/(R2+R3)$ bleibt, weil diese Widerstände dann das Eingangspotential um diesen Wert von der Schwelle nach oben oder unten eingestellt haben. Ist also $Uq' = Uq/5 = 1Vss$, so ist die dazugehörige Quellenimpedanz (vier Kurzschlüsse) $1/5 \times R1 = 2$ Ohm. Damit nun Ue auf die Hälfte absinkt, darf Rh/28 ebenfalls mit 2 Ohm angesetzt werden, also Rh = 56 Ohm. Das ist ohne Frage ein recht theoretischer Wert, da

1) die Treiber keine verschwindende Ausgangsimpedanz haben, und

2) die Leistungsaufnahme für das Bushandling und die thermische Belastung aus Gründen der Zuverlässigkeit nicht zu hoch angesetzt werden darf.

Da außerdem die kritische Hysteresegrenze nicht unbedingt erreicht werden soll, sei das Kriterium "Wellenwiderstandsbetrachtung" zur Hand genommen. Danach sollte ein Treiber, speist er in der Mitte des Busses ein Signal ein, nach beiden Seiten hin den Leitungswellenwiderstand "sehen". Sei dieser z.B. 200 Ohm, so ergibt sich mit beiden Hälften 100 Ohm, demnach für Rh/28 = 100 Ohm und für Rh = 2,8 KOhm. Daraus resultiert die Bemessung für die Widerstände in der Zeichnung:

R2 = 12 KOhm,
R3 = 3,3 KOhm.

Damit beträgt die Spannungsteilung zwischen R1 und Rh/28 aber jetzt lediglich maximal:

$$Ue = Uq/(n + 1) \times 100/(100 + 10/(n + 1)) = 0,5 V;$$

(n sei wiederum die Anzahl der Kurzschlüsse).
Das ergibt ein n von maximal acht Kurzschlüssen. Diese Grenze sollte aber nicht erreicht werden.

Die Stromaufnahme der verwendeten Bustreiber ist nahezu ausschließlich durch die äußere Beschaltung bestimmt. Die vorgestellte Schnittstellenanordnung ist zur Anwendung in MOBS- (modular onboard switching) Systemen in Satelliten ideal geeignet, insbesondere da sich Fehler bei Widerständen fast immer nur durch eine Unterbrechung äußern und selbst Kurzschlüsse bei den Serienkondensatoren sich erst dann nachteilig auswirken, wenn auch noch der beigeordnete Treiber durch Kurzschluß ausfällt. Dieser Fall tritt jedoch mit einer sehr geringen Verbundwahrscheinlichkeit ein.

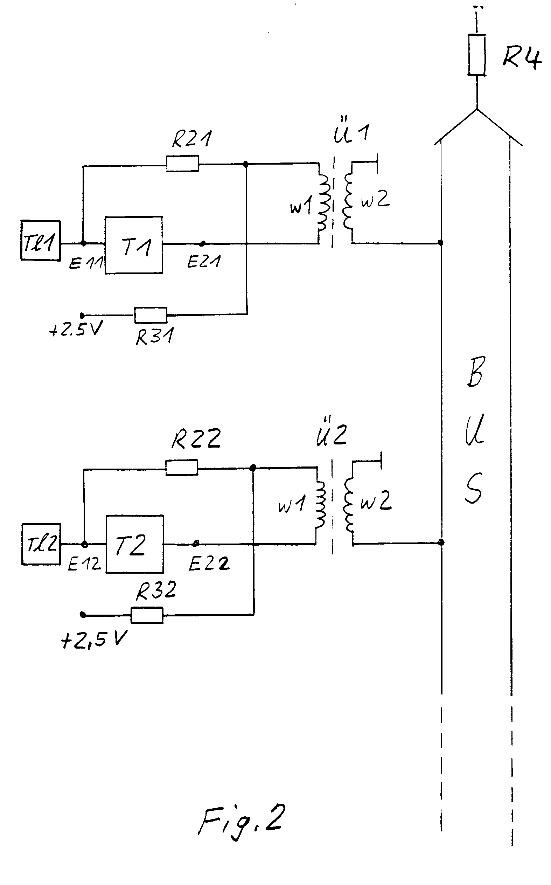

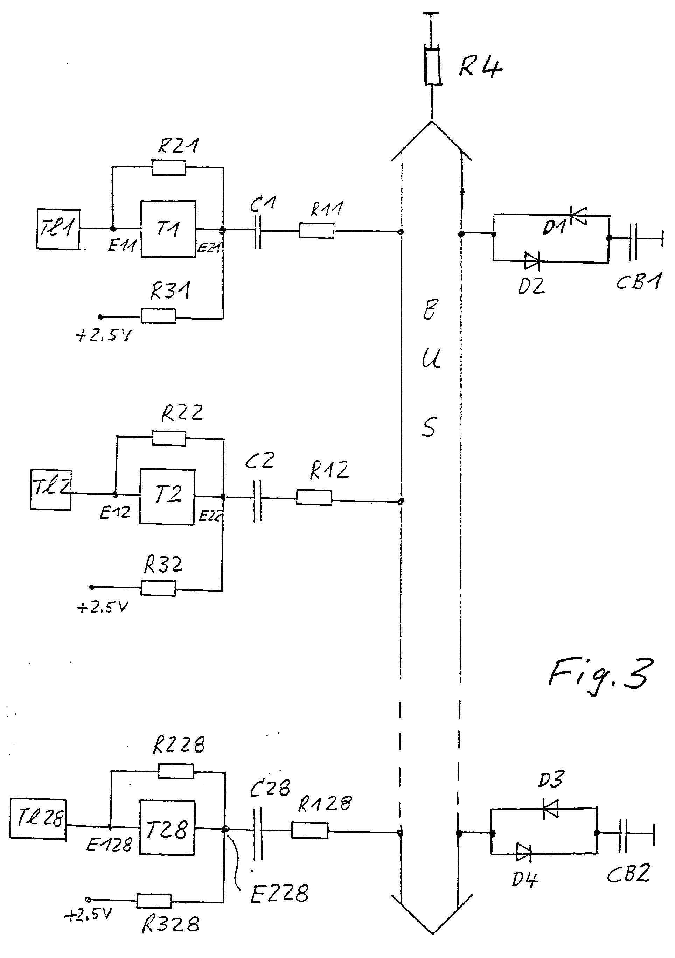

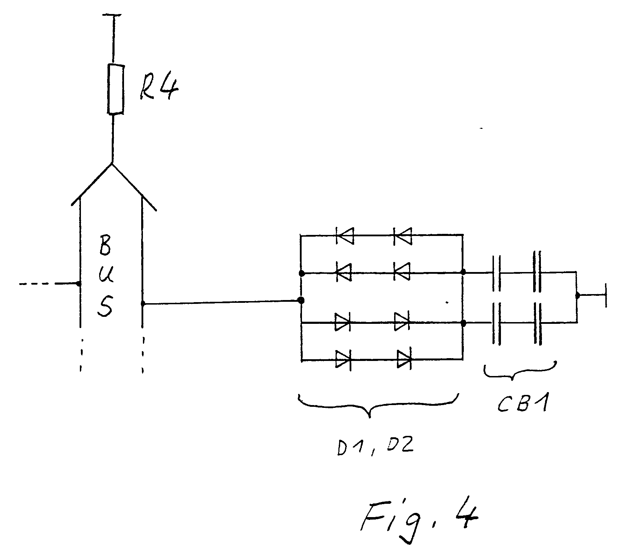

Die Gleichspannungsabtrennung kann auch anders als zuvor geschildert erfolgen, z.B. durch einen Übertrager Ü1, Ü2, ... (Fig. 2). Dessen Sekundärwicklung w2 kann beispielsweise direkt an den Bus angeschlossen werden.

Die Primärwicklung w1 (des Übertragers Ü1) ist mit ihrem einen Anschlußende an den Treibereingang E21 und mit ihrem anderen Anschlußende an den Teilerabgriff des aus den Widerständen R21, R31, bzw. R22, R32 ... bestehenden Spannungsteilers angeschlossen. Für die Bemessung der Spannungsteilerwiderstände ist davon auszugehen, daß sie einerseits so hochohmig sein müssen, daß der Kurzschluß eines Treibers nicht als Kurzschluß oder zu niedrige Impedanz auf den Bus transformiert wird, aber andererseits auch so niederohmig sein müssen, daß ein Treiber in Senderichtung genug Leistung auf den Bus transformieren kann, um alle anderen als Empfänger betriebenen Treiber über die ihnen zugeordneten Übertrager anzusteuern. Im Realfall wird nicht die gesamte Treiberleistung wegen Streuverlusten der Übertrager auf den Bus übertragen. Diese Forderungen sind erfüllt, wenn die wechselspannungsmäßige Parallelimpedanz der Widerstände R2 und R3 in der Größenordnung von 100 Ohm liegt. Als Übertrager Ü eignet sich vorzugsweise ein Hochfrequenz-Ferritkern-Übertrager. Die Realisierung mittels eines Übertragers als Gleichspannungsabtrennmittel erfordert weniger Bauelemente als die zuvor vorgestellte Lösung mit Gleichspannungsabtrennkondensator. Die Ausfallwahrscheinlichkeit der Hochfrequenz-Ferritkernübertrager läßt sich durch spezielle Aufbaumaßnahmen (Vergießen, Wickelanordnung mit großem Windungsabstand) erniedrigen.

In einer Ausgestaltung der Erfindung ist der Bus beidseitig mit Bauelementen mit Schwellwertverhalten abgeschlossen. Im Ausführungsbeispiel nach Fig. 3 bestehen diese Bauelemente aus antiparallel gegen Massepotential geschalteten Dioden D1, D2 am oberen sowie ebenfalls antiparallel geschalteten Dioden D3, D4 am unteren Busende. Die Schwellenspannung $U_S$ dieser Bauelemente - hier Dioden - muß größer sein als der Hysteresehub $U_H$ der Hysteresebeschaltung für die Treiber T1, T2, ... . Beträgt der Hysteresehub $U_H$ beispielsweise 0,625 V, so können Siliziumdioden mit einer Schwellenspannung von $U_S$ = 0,7 V verwendet werden. Für Signalamplituden auf dem Bus kleiner als 0,7 V ist der Bus "offen"; d.h. es ist nur der ohmsche Bus-Erdungswiderstand R4 wirksam. Steigen die Signalamplituden auf dem Bus über $U_S$ an, werden die überschüssigen Amplitudenanteile bei ± 0,7 V abgeschnitten. Tritt nun ein Kurzschluß auf, z.B. an einem Bustreiberausgang, so ist der Bus wechselspannungsmäßig zusätzlich mit dem entsprechenden Widerstand R11 ... R128, an dessen Treiber der Kurzschluß auftritt, belastet. Dies reduziert die Signalamplituden auf dem Bus. Der entsprechende Widerstand R11 ... R128 übernimmt dann den Busabschluß. Bei einem solchen Kurzschluß können durch die Belastung mit einem der Widerstände R11 ... R128 die Signalamplituden auf dem Bus, die zuvor ausreichend waren um die Dioden D1, D2, D3 und D4 durchzusteuern, soweit absinken, daß der Schwellwert $U_S$ nicht mehr erreicht wird. Bei sehr hohen Signalamplituden auf dem Bus wird trotz zusätzlicher Belastung durch einen der Widerstände R11 ... R128 der Schwellwert $U_S$ erreicht, und es kommt zu einem sogenannten Spannungsteilerverhalten:

Der Bus ist dann sowohl mit dem entsprechenden Widerstand R11 ... R128 als auch mit dem Bahnwiderstand der Dioden D1, D2, D3 bzw. D4 abgeschlossen. Der Widerstand R4 ist um mehrere Größenordnungen größer als die Widerstände R11 ... R128 und die Bahnwiderstände der Dioden D1, D2, D3 bzw. D4, so daß er am Spannungsteilerverhalten nicht mitwirkt. Vorteilhaft ist es, in Serie zu jeweils einem Begrenzerdiodenpaar D1, D2 oder D3, D4 einen Gleichspannungsabtrennkondensator CB1 bzw. CB2 gegen Massepotential zu schalten. Diese Kondensatoren CB1 und CB2 müssen kapazitätsmäßig so groß gewählt werden, daß der Gleichspannungswert für die Hysteresebeschaltungen noch aus den Flanken der übertragbaren Daten regenerierbar ist. Am besten wählt man die Kondensatoren CB1 und CB2 jeweils so groß wie die Kondensatoren C1 bis C28.

Zur Erhöhung der Fehlertoleranz, insbesondere für die Anwendung in Satelliten, ist es zweckmäßig, die Dioden D1 bis D4 und die Kondensatoren CB1 und CB2 mehrfach vorzusehen. Ein solches Ausführungsbeispiel für einen einseitigen Busabschluß zeigt Fig. 4. Hier sind zwei Serienparallelschaltungen von Dioden antiparallel zueinander angeordnet. Der entsprechende Gleichspannungsabtrennkondensator besteht aus vier Teilkondensatoren - je zwei in Serie geschalteten Kondensatoren, die zu einer Parallelschaltung vereinigt sind. Natürlich muß bei diesen Schaltungsvarianten darauf geachtet werden, daß der entsprechende Schwellwert $U_S$ und die Gesamtkapazität CB1 bzw. CB2 auf den Bus und die übrigen Bauelemente abgestimmt ist.

Durch die Maßnahmen nach der Erfindung ist ein amplitudenabhängiger passiver dynamischer Busabschluß realisierbar, der zur wirksamen Stabilisierung der Signalamplituden auf dem Bus führt.

Anstelle des Busabschlusses mit Bauelementen mit Schwellwertverhalten können die Spannungsteilerwiderstände R31, R32, ... zwischen jeweils dem busnahen Treibereingang E21, E22, ... und Stromversorgung bezüglich jener Treiber, die in der Nachbarschaft eines Busendes angeordnet sind - z.B. die letzten 2 oder 3 Treiber in der Nachbarschaft eines Busendes - so bemessen werden, daß ihr gemeinsamer Parallelwiderstand; d.h. der durch die Parallelschaltung sich bildende Widerstandswert, in etwa dem Wellenwiderstand des Busses entspricht.

## Patentansprüche

1. Buskoppelschaltung zwischen einer Datenübertragungseinrichtung (Bus) und mindestens einem Datensender und einem Datenempfänger als Teilnehmer, wobei jeder Teilnehmer einen bidirektionalen Treiber (T1, T2, ...) aufweist, wobei Gleichspannungsabtrennmittel (Cl, C2; R11, R12 ...) zwischen Treiber (T1, T2, ...) und Bus, die gleichzeitig eine Arbeitsimpedanz für den Treiber darstellen, vorgesehen sind und wobei jeder Treiber (T1, T2, ...) eine Hysterese aufweist, dadurch gekennzeichnet, daß für jeden Treiber (T1, T2, ...) eine zusätzliche Hysteresebeschaltung vorgesehen ist, die aus einem für Wechselsignale aktiven Spannungsteiler (R21, R31; R22, R32 ...) besteht, dessen Teilerkette zwischen den busfernen Eingang (E11, E12, ...) des Treibers (T1, T2, ...) und der Stromversorgung und dessen Teilerabgriff an den busnahen Treibereingang (E21, E22, ...) gelegt ist, um unmittelbar am gleichstromfreien (z.B. kapazitiven) Ankoppelpunkt des Treibers (T1, T2, ...) an den Bus einen Gleichspannungswert wiedereinzuführen und daß der Spannungsteiler zur Erreichung eines fehlertoleranten Busses folgendermaßen bemessen ist:

$$\frac{R3x}{R2x + R3x} = \frac{1}{1+n},$$

wobei

R2 den an den busfernen Treibereingang angeschlossenen Spannungsteilerwiderstand,

R3 den an die Stromversorgung angeschlossenen Spannungsteilerwiderstand,

x die Laufvariable 1, 2, 3. ... des jeweiligen Teilnehmers und

n die Zahl der tolerierbaren Kurzschlüsse der Treiber darstellt.

2. Buskoppelschaltung nach Anspruch 1, gekennzeichnet durch eine Serienschaltung eines Kondensators (C1, C2, ...) mit einem Widerstand (R11, R12, ...) als Gleichspannungsabtrennmittel.

3. Buskoppelschaltung nach Anspruch 1 oder 2, dadurch gekennzeichnet, daß der Bus an mindestens einem seiner Enden mit einem Bus-Erdungswiderstand (R4) abgeschlossen ist.

4. Buskoppelschaltung nach einem der Ansprüche 1 bis 3, dadurch gekennzeichnet, daß der Bus beidseitig mit mindestens einem Bauelement (D1, D2, C1; D3, D4, C2) abgeschlossen ist, das Schwellenverhalten aufweist, wobei die Ansprechschwelle dieser Bauelemente größer gewählt ist als der Hysteresehub der Hysteresebeschaltung für jeden Treiber (T1, T2, ...).

5. Buskoppelanordnung nach einem der Ansprüche 1 bis 3, dadurch gekennzeichnet, daß als Busabschluß jeweils eine Antiparallelschaltung zweier Dioden (D1, D2; D3, D4) gegen Massepotential vorgesehen ist.

6. Buskoppelanordnung nach Anspruch 5, dadurch gekennzeichnet, daß die Antiparallelschaltung der zwei Dioden (D1, D2; D3, D4) an ihrem busfernen Anschlußende über einen Gleichspannungsabtrennkondensator (CB1, CB2) gegen Massepotential geschaltet ist.

7. Buskoppelanordnung nach einem der Ansprüche 1 bis 5, dadurch gekennzeichnet, daß zur Erhöhung der Fehlertoleranz die Bauelemente mit Schwellwertverhalten, bzw. die Dioden oder der Gleichspannungsabtrennkondensator mehrfach vorhanden sind.

8. Buskoppelanordnung nach Anspruch 6 oder 7, dadurch gekennzeichnet, daß der Gleichspannungsabtrennkondensator (C1; C2) bzw. die Zusammenschaltung der Gleichspannungsabtrennkondensatoren (CB1, CB3; CB2, CB4) kapazitätsmäßig so groß gewählt ist, daß der Gleichspannungswert für die Hysteresebeschaltung noch aus den Flanken der übertragbaren Daten regenerierbar ist.

9. Buskoppelanordnung nach einem der Ansprüche 6 bis 8, dadurch gekennzeichnet, daß der Gleichspannungsabtrennkondensator (CB1; CB2) bzw. die Zusammenschaltung der Gleichspannungsabtrennkondensatoren (CB1, CB3; CB2, CB4) kapäzitätsmäßig so groß gewählt ist wie die als Gleichspannungsabtrennmittel jeweils zwischen dem Treiber und Bus vorgesehenen Kondensatoren (C1, C2, ..., C28).

10. Buskoppelanordnung nach einem der Ansprüche 1 bis 3, dadurch gekennzeichnet, daß die Spannungsteilerwiderstände (R31, R32, ...) zwischen jeweils dem busnahen Treibereingang (E21, E22, ...) und Stromversorgung bezüglich jener Treiber, die in der Nachbarschaft eines Busendes angeordnet sind, so bemessen sind, daß ihr gemeinsamer Parallelwiderstand in etwa dem Wellenwiderstand des Busses entspricht.

## Claims

1. A bus coupling circuit between a data transfer device (bus) and at least one data transmitter and a data receiver as subscribers, with each subscriber including a bidirectional driver (TI1 T2, ...); with direct voltage splitting means (C1, C2; R11, R12, ...) being provided between driver (T1, T2, ...) and bus to simultaneously constitute a working impedance for the driver and each driver (T1, T2, ...) has a hysteresis, <u>characterized in that</u> an additional hysteresis circuit is provided for each driver (T1, T2, and is composed of a voltage divider (R21, R31; R22, R32, which is active for alternating signals and whose divider chain is placed between the input (E11, E12) of the driver (T1, T2, ...) remote from the bus and the current supply and whose divider tap is placed at the driver input (E21, E22, ...) near the bus so as to reintroduce a direct voltage value into the bus directly at the direct-current-free (e.g. capacitive) coupling point of the driver (T1, T2, ... ) and the voltage divider, in order to realize a fault tolerant bus, is dimensioned as follows:

$$\frac{R3x}{R2x + R3x} = \frac{1}{1 + n},$$

where

R2     is the voltage divider resistor connected to the driver input remote from the bus;

R3     is the voltage divider resistor connected to the current supply;

x     is the running variable 1, 2, 3, ..., of the respective subscriber; and

n     is the number of tolerable driver short circuits.

2. A bus coupling circuit as defined in claim 1, further including a series connection of a capacitor (C1, C2, ... with a resistor (R11, R12, ...) as direct voltage splitting means.

3. A bus coupling circuit as defined in claim 1 or 2, wherein the bus is terminated at at least one of its ends by means of a bus grounding resistor (R4) at least one of its ends.

4. A bus coupling circuit as defined in one of claims 1 to 3, wherein the bus is terminated on both sides by means of at least one component (D1, D2, C1; D3, D4, C2) which exhibits threshold behavior, with the response threshold of said components being selected to be higher than the hysteresis rise of the hysteresis circuit for each driver (T1, T2, ... ).

5. A bus coupling arrangement as defined in one of claims 1 to 3, wherein an anti-parallel connection of two diodes (D1, D2; D3, D4) to ground is provided as bus termination.

6. A bus coupling arrangement as defined in claim 5, wherein, at their terminal remote from the bus, the anti-parallel connection of the two diodes (D1, D2; D3, D4) is connected to ground potential by way of a direct voltage splitting capacitor (CB1, CB2).

7. A bus coupling arrangement as defined in one of claims 1 to 5, wherein fault tolerance is increased in that the components exhibiting threshold behavior and the diodes or the direct voltage splitting capacitor, respectively, are provided several times.

8. A bus coupling arrangement as defined in claim 6 or 7, wherein the direct voltage splitting capacitor (C1; C2) and the interconnection of the direct voltage splitting capacitors (CB1, CB3; CB2, CB4) is selected so large with respect to capacitance that the direct voltage value of the hysteresis circuit can still be regenerated from the edges of the transmitted data.

9. A bus coupling arrangement as defined in one of claims 6 to 8, wherein the direct voltage splitting capacitors (CB1, CB2) and the interconnection of the direct voltage splitting capacitors (CB1, CB3; CB2, CB4) is selected, with respect to capacitance, to be of the same size as the capacitors (C1, C2, ..., C28) provided as direct voltage splitting means between the driver and the bus.

10. A bus coupling arrangement as defined in one of claims 1 to 3, wherein the voltage divider resistances (R31, R32, ...) between the respective driver input (E21, E22, ...) near the bus and the current supply are dimensioned, relative to those drivers disposed in the vicinity of an end of the bus, so that their common parallel resistance approximately corresponds to the characteristic impedance of the bus.

**Revendications**

1. Circuit de couplage à un bus, prévu entre un dispositif de transmission de données (bus) et au moins un émetteur de données et un récepteur de données comme abonnés, chaque abonné présentant un circuit d'attaque bidirectionnel (T1, T2, ...), avec prévision de moyens de coupure de tension continue (C1, C2; R11, R12 ...) entre les circuits d'attaque (T1, T2, ..) et le bus, moyens qui représentent en même temps une impédance de travail pour les circuits d'attaque, et chaque circuit d'attaque (T1, T2, ...) présentant une hystérésis, caractérisé par la prévision d'un montage supplémentaire à hystérésis qui se compose d'un diviseur de tension (R21, R31; R22, R32 ...) actif pour des signaux alternatifs, dont la chaîne de division est connectée entre l'entrée éloignée du bus (E11, E12, ...) du circuit d'attaque (T1, T2, ...) et l'alimentation et dont la prise intermédiaire du diviseur est connectée à l'entrée côté bus (E21, E22, ...) du circuit d'attaque, afin de réintroduire une valeur de tension continue directement au point de couplage - exempt de courant continu (capacitif par exemple) - du circuit d'attaque (T1, T2, ...) au bus, et que, afin d'obtenir un bus tolérant aux pannes, le diviseur de tension est dimensionné comme suit :

$$\frac{R3x}{R2x + R3x} = \frac{1}{1+n},$$

où

R2 est la résistance de diviseur de tension connectée à l'entrée éloignée du bus du circuit d'attaque,

R3 est la résistance de diviseur de tension connectée à l'alimentation,

x est le numéro d'ordre 1, 2, 3 ... de l'abonné concerné et

n est le nombre des courts-circuits tolérables des circuits d'attaque.

2. Circuit de couplage à un bus selon la revendication 1, caractérisé par un montage en série d'un condensateur (C1, C2, ...) et d'une résistance (R11, R12, ...) comme moyens de coupure de la tension continue.

3. Circuit de couplage à bus selon la revendication 1 ou 2, caractérisé en ce que le bus est terminé à au moins l'une de ses extrémités par une résistance (R4) de mise à la terre du bus.

4. Circuit de couplage à bus selon une des revendications 1 à 3, caractérisé en ce que le bus est terminé des deux côtés par au moins un composant (D1, D2, C1; D3, D4, C2) présentant un comportement de seuil, le seuil de réponse de ces composants étant choisi supérieur à l'excursion d'hystérésis du montage à hystérésis pour chaque circuit d'attaque (T1, T2, ...).

5. Circuit de couplage à bus selon une des revendications 1 à 3, caractérisé en ce que chaque terminaison de bus est constituée par un montage tête-bêche de deux diodes (D1, D2; D3, D4), montage qui est connecté d'un côté au potentiel de la masse.

6. Circuit de couplage à bus selon la revendication 5, caractérisé en ce que le montage tête-bêche des deux diodes (D1, D2; D3, D4) est connecté au potentiel de la masse à son extrémité de raccordement éloignée du bus et à travers un concensateur de coupure de tension continue (CB1, CB2).

7. Circuit de couplage à un bus selon une des revendications 1 à 5, caractérisé en ce que, afin d'accroître la tolérance aux pannes, les composants ayant un comportement de seuil, notamment les diodes ou le condensateur de coupure de tension continue, sont prévus en plusieurs exemplaires.

8. Circuit de couplage à un bus selon la revendication 6 ou 7, caractérisé en ce que la capacité du condensateur de coupure de tension continue (C1; C2) ou la capacité globale des condensateurs de coupure de tension continue (CB1, CB3; CB2, CB4) montés ensemble est si grande que la valeur de tension continue pour le montage à hystérésis puisse encore être regénérée à partir des flancs des données transmissibles.

9. Circuit de couplage à un bus selon une des revendications 6 à 8, caractérisé en ce que la capacité du condensateur de coupure de tension continue (CB1; CB2) ou la capacité globale des condensateurs de coupure de tension continue (CB1, CB3; CB2, CB4) montés ensemble est choisie de manière qu'elle corresponde à la capacité des condensateurs (C1, C2, ...), C28) prévus en tant que moyens de coupure de tension continue entre chaque circuit d'attaque et le bus.

10. Circuit de couplage à un bus selon une des revendications 1 à 3, caractérisé en ce que les résistances de diviseur de tension (R31, R32, ...) entre l'entrée côté bus (E21, E22, ...) du circuit d'attaque et l'alimentation des circuits d'attaque placés à proximité d'une extrémité du bus sont dimensionnées de manière que leur résistance parallèle collective corresponde à peu près à l'impédance caractéristique du bus.

Fig. 1

Fig. 2

10

Fig.3

Fig. 4